# EUROPEAN PATENT SPECIFICATION

(11) **EP 2 219 789 B1**
(45) Date of publication and mention of the grant of the patent: **15.07.2015**
(21) Application number: 08863549.5
(22) Date of filing: 19.12.2008
(51) Int. Cl.: B05B 1/26, B05B 7/08, B01J 2/04, B05B 7/16

(54) **DEVICE AND METHOD FOR PRODUCING AEROSOL**
VORRICHTUNG UND VERFAHREN ZUR HERSTELLUNG EINES AEROSOLS
DISPOSITIF ET PROCÉDÉ POUR PRODUIRE UN AÉROSOL

(30) Priority: 20.12.2007 FI 20071001
(43) Date of publication of application: 25.08.2010
(73) Proprietor: BENEQ OY, 01510 Vantaa (FI)
(72) Inventor: ASIKKALA, Kai, FI-00500 Helsinki (FI)
(74) Representative: Kolster Oy Ab
(86) International application number: PCT/FI2008/050774
(87) International publication number: WO 2009/080893

(56) References cited:
- EP-A2- 0 331 343
- FR-A- 1 200 924
- GB-A- 621 785
- GB-A- 854 402
- US-A- 2 410 215
- US-A- 5 372 754
- US-A1- 2003 047 824
- US-B1- 6 338 472
- KO, GWON HYUN ET AL.: 'Droplet collision processes in an inter-spray impingement system' AEROSOL SCIENCE vol. 36, no. 11, November 2005, pages 1300 - 1321, XP005124373

## Description

### BACKGROUND OF THE INVENTION

The present invention relates to a device for producing high-quality aerosol or mist, and particularly to a device according to the preamble of claim 1 for producing aerosol or mist, the device comprising at least two atomizers for atomizing liquid into drop jets. The present invention also relates to a method for producing aerosol or mist and particularly to a method according to the preamble of claim 7 for producing aerosol or mist, the method comprising atomizing at least one liquid into two or more drop jets.

In accordance with prior art, liquid can be atomized into small droplets by a plurality of different techniques, such as with a gas-dispersing atomizer, a pressure-dispersing atomizer and an ultrasound atomizer. Different atomizing methods are described extensively in publication Huimin Liu, Science and Engineering of Droplets - Fundamentals and Applications, (2000), William Andrew Publishing, LLC, New York, p. 19 to 120, particularly p. 59 to 61, wherein a so-called 'whistle atomization' device is described, wherein liquid jets colliding with each other are atomized by means of ultrasound. The device can be used to produce drops of a size of less than 10 micrometres from water at a high production rate.

Finnish published patent 98832, 16 March 1997, Liekki Oy, discloses a method and a device for spraying material, the substance to be sprayed being conveyed to a flame generated by means of a combustion gas, and the flame is used to spray the particles in the material to be sprayed to the desired target. The substance to be sprayed is conveyed to the flame in a liquid form and atomized into droplets by means of gas substantially in the vicinity of the flame. In this manner, extremely small particles, in the order of a nanometre, can be produced rapidly, inexpensively and in one step. The problem in the device disclosed in the publication is that nanoparticles are produced in a high-rate flame, and in the device, the atomizing process and the flame generation process are interconnected, and the device has no degree of freedom for optimizing the atomizing and the flame irrespective of one another. The device cannot either be used for producing particles simultaneously from different types of liquids. Document GB 854402 describes one prior art apparatus comprising two atomizers arranged in an angle smaller than 90 degrees relative to each other such that drop jets formed with the atomizers collide to each other for producing mist. Document US 6338472 B1 describes another prior art device for atomizing liquid material into mist comprising liquid droplets. The device comprises two atomizers arranged in an inclined angle towards each other such that drop jets formed with the atomizers collide to each other for producing mist. The device further comprises a secondary gas conduit for supplying gas into the collision point of the droplet jest. Document FR 1200924 describes further a prior art apparatus comprising two atomizers arranged in an angle or inclined relative to one another such that drop jets formed with the atomizers collide each other in an angle defined atomizers. The apparatus further comprises a gas nozzle for supplying gas to collision point of the drop jets. Document GB 621785 A describes yet another prior art device for atomizing liquid into an aerosol using gas flow. The device comprises two nozzles arranged opposite to each other and oriented towards one another in a manner making the drop jets produced thereby collide into each other. Alterative the device may comprise three atomizers arranged in an angle of 120 degrees relative to one another.

Accordingly, the problem the in prior art is that the prior art does not enable a simple production of high-quality aerosol or mist at a high production rate. Thus, prior art production of high-quality mist requires a complex device.

### BRIEF DESCRIPTION OF THE INVENTION

Thus, the object of the present invention is to provide a method and a device for implementing the method in a manner solving the above problems. The objects of the present invention are achieved with a device according to the characterizing part of claim 1, characterized in that at least two atomizers are arranged oriented substantially directly towards one another in a manner making the drop jets produced thereby collide directly into each other. The object of the invention is further achieved with a method according to the characterizing part of claim 7, characterized by directing at least two drop jets substantially directly towards one another in a manner making the drop jets collide directly into each other.

Preferred embodiments of the invention are described in the dependent claims.

The device and the method of the present invention are based on the surprising observation that when two atomized drop jets are oriented in a manner making them collide into one another, aerosol or mist is produced, the drops thereof being small. Aerosol refers to a mixture in which solid or liquid particles float amidst a gas. In the present context, mist refers to a mixture containing solid or liquid particles, the average size thereof being larger than in aerosol. By orienting the drop jets preferably substantially directly against each other, mist or aerosol is produced, the mobility thereof being approximately non-existent, whereby said mist or aerosol may be moved in the desired direction with a separate gas flow oriented substantially to the collision point of the drop jets. Since the drop jets are not united until at the collision point, said device may be used to produce mist or aerosol composed of at least two different liquids, such as drops atomized from water and methanol, for example, and said liquids may be immiscible with one another, such as water and petrol, for example, or reactive with one another in such a manner that conducting them together to the same atomizer is impossible, for instance because the liquids together form a gelling mixture, such as water containing a metal salt and tetramethylorthosilane (TEOS), for example. The device of the invention can be used to produce mist or aerosol also from mixtures, liquids containing a solvent and a metal salt dissolved therein or liquids that are colloidal solutions. The average drop size of the liquid drops produced with different atomizers does not necessarily have to be the same, whereby the average drop size of the drop jets colliding into each other is different. As regards the functioning of the device, it is preferable that the momentum of the colliding drop jets is substantially the same, whereby the momentum of mist generated on the basis of the principle of conservation of the momentum is substantially zero. Consequently, the method and the device of the invention may be used to produce mists or aerosols composed of different materials.

An advantage of the present invention is that the method and the device of the invention may be used to produce mist or aerosol of a uniform quality. Since the device of the invention may assume a plurality of different embodiments, the mist or aerosol may be shaped into a line-like mist front or an aerosol front, for example, which may be utilized preferably in coating broad, web-like material, for example. Examples of such include a paper web in a paper making machine, a textile web in a textile machine or a glass web in a glass production process, a float process, in particular. In addition, mist or aerosol according to the present invention may be further utilized for producing nanoparticles.

### BRIEF DESCRIPTION OF THE FIGURES

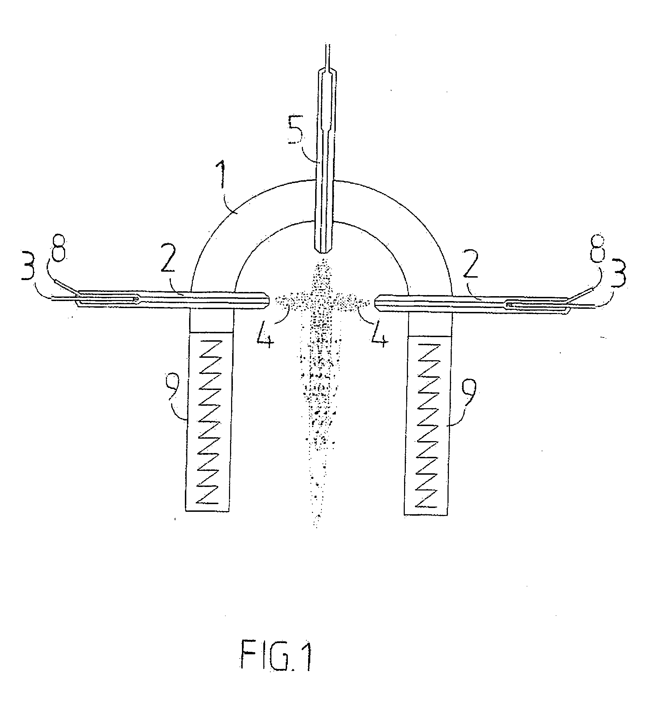

In the following, the invention will be described in more detail in connection with preferred embodiments with reference to the accompanying drawing, in which
Figure 1 shows a schematic view of the device of the invention, wherein two gas-dispersing atomizers are oriented substantially directly against one another.

### DETAILED DESCRIPTION OF THE INVENTION

Figure 1 shows a device according to the invention for producing mist. Two atomizers 2, oriented substantially towards one another, are fixed to a body 1 of the device. The atomizers 2 are arranged in the device oriented directly towards one another in accordance with Figure 1. In other words, the atomizers 2 are preferably arranged substantially coaxially opposite one another in such a manner that drop jets 4 thereof collide substantially directly against each other. The device may comprise two or more atomizers 2. The atomizers 2 are preferably arranged in pairs for constituting one or more atomizer pairs in such a manner that the atomizers 2 of each atomizer pair are oriented substantially directly, preferably coaxially, towards each other, whereby the drop jets 4 of each atomizer pair collide directly into each other. The atomizer pairs may be further arranged in the device in succession or adjacently vertically or horizontally, for example.

Liquid 3 to be atomized and atomizing gas 8 are fed to the atomizer 2. The atomizing gas 8 and the liquid 3 are fed to the atomizer 2 preferably at different rates, whereby the rate difference between the atomizing gas 8 and the liquid 3 at the outlet of the atomizer 2 makes the liquid 3 disperse, atomize, into a drop jet 4 composed of small droplets. The drop jets 4 collide with each other, whereby mist or aerosol, composed of very small droplets is surprisingly produced. When the drop jets 4, oriented substantially directly towards each other, collide directly against each other, mist or aerosol is produced, the mobility of which is approximately non-existent, their momentums being substantially the same. Furthermore, the device may be adapted to include means for feeding at least two different liquids 3 to at least two different atomizers. In other words, the device may be accomplished in a manner allowing the same or a different liquid 3 to be fed to two or more atomizers 2. In other words, the same or a different liquid may be fed to the atomizers 2 of each atomizer pair, when desired. Furthermore, the same liquid or liquids can be used in at least two atomizer pairs as in the other atomizer pairs. This being so, when desired, each atomizer pair is able to produce mist or aerosol different from or similar to that of the adjacent atomizer pair. Furthermore, the atomizers 2 of the device may be adapted to produce drop jets 4, the average drop size of the drops thereof being substantially different or similar. The drop size can be affected for instance by the geometry of the atomisers 2 or the rate of the liquid 3 and the atomizing gas or the rate difference therebetween. This enables the production of mist or aerosol having a homogenous or heterogeneous drop size.

The device preferably also comprises means for conveying a gas flow from at least one direction to the collision point of the drop jets 4. This is preferably implemented by providing the device with a gas nozzle 5 for feeding gas from at least one direction to the collision point of the drop jets 4. This being so, the gas flow can be used to move or shift the mist or aerosol produced at the collision point of the drop sets 4 in the desired direction. Any gas can be used in the gas nozzle 5. In other words, it may be an inert gas or, alternatively, it may be a combustion gas or a gas reacting with the mist or the aerosol. In the embodiment of Figure 1, the gas nozzle 5 is arranged in the device in a manner making the gas flow proceed and collide in a substantially perpendicular direction with respect to the drop jets 4.

In the method of the present invention for producing mist or aerosol, one or more liquids are atomized into two or more drop jets 4. The drop jet 4 itself may constitute a mist or an aerosol. In accordance with the invention, at least two drop jets 4 are directed substantially directly towards each other in a manner making the drop jets 4 collide directly into each other. Two drop jets 4 are preferably directed substantially coaxially towards one another in a manner making the drop jets 4 collide substantially directly against one another. Herein, coaxial means that the drop jets move substantially coaxially directly towards one another. In other words, the angle of collision between the drop jets 4 is about 180 degrees. In the method, two or more drop jets 4 may be directed in pairs directly towards each other for producing one or more drop jet pairs in a manner making the drop jets 4 directed directly towards each other collide directly with each other. The drop jets 4 directed substantially directly against each other are atomized in such a manner that the average drop size of the drops therein is substantially different or similar.

In the method, at least two different drop jets 4 can be produced by using at least two different liquids 3. Thus, the drop jets 4 colliding into each other may be produced from the same or a different liquid 3. Similarly, different liquids 3 or the same liquid(s) 3 may be used in the different drop jet pairs. The different liquids 3 used may be mutually immiscible or miscible. In an embodiment of the invention, at least one liquid 3 containing a solvent and a metal salt dissolved therein is used. The solvent may be an exothermal liquid. In addition, the liquid used in the method may be a mixture, an emulsion or a colloidal solution. An emulsion refers to a mixture of at least two liquids that are inherently immiscible with each other. A colloidal solution refers to a solution composed of two different phases: a dispersed phase and a continuous phase. The dispersed phase contains small particles or droplets evenly divided in the continuous phase. In other words, a colloidal solution is a solution containing colloidal particles.

The mist or aerosol produced in the collision of the drop jets 4 is substantially immobile, the momentums of the drop jets 4 being substantially the same. In other words, the momentums are substantially the same, but have opposite signs. The mist or aerosol produced may thus be moved by conducting at least one gas flow into the collision point of the drop jets 4. The gas flow may be used to move the mist or aerosol and, in addition, its shape may be controlled. In an embodiment, the gas flow to the collision point of the drop jets 4 in a substantially perpendicular direction with respect to the direction of the drop jets 4. Alternatively, two or more gas flow may be conveyed to the collision point of the gas jets 4. In the embodiment of Figure 1, the device further comprises a thermal reactor accomplished with heaters 9. The thermal reactor may also be accomplished with a flame, for example. Thus, the gas flow discharged from the gas nozzle 5 directs the thus produced mist or aerosol into the thermal reactor 9. In the thermal reactor 9, at least part of the substance contained by the mist or aerosol is evaporated, whereby nanoparticles may be produced from the drops of the mist, the average aerodynamic diameter of the nanoparticles being less than 1,000 nm.

It is obvious to a person skilled in the art that as technology advances, the inventive concept can be implemented in a variety of ways. The invention and its embodiments are not restricted to the above examples, but may vary within the scope of protection of the claims.

## Claims

1. A device for producing mist or aerosol, the device comprising at least two atomisers (2) for atomizing a liquid (3) conducted thereto into drop jets (4), the at least two atomizers (2) being arranged oriented directly towards one another in a manner making the drop jets (4) produced thereby collide directly into each other **characterized in that** the device comprises at least one gas nozzle (5) for feeding gas from at least one direction to a collision point of the drop jets (4).

2. A device as claimed in claim 1, **characterized in that** at least two atomizers (2) are arranged coaxially oppositely in a manner making the drop jets (4) thereof collide substantially directly against each other.

3. A device as claimed in claim 1 or 2, **characterized in that** the atomizers (2) are arranged in pairs for producing one or more atomizer pairs in such a manner that the atomizers (2) of each atomizer pair are oriented directly towards each other.

4. A device as claimed in claim 1, **characterized in that** the gas nozzle (5) is arranged in the device in such a manner that the gas flow passes in a substantially perpendicular direction with respect to the direction of the drop jets (4).

5. A device as claimed in any one of the preceding claims 1 to 4, **characterized in that** the device comprises means for feeding at least two different liquids (3) to at least two different atomizers (2).

6. A device as claimed in any one of the preceding claims 1 to 5, **characterized in that** at least two atomizers (2) are arranged to produce drop jets (4), the average drop sizes of the drops thereof being different.

7. A method for producing mist or aerosol, in which method at least one liquid (3) is atomized into two or more drop jets (4) by directing at least two drop jets (4) directly towards each other in such a manner that the drop jets (4) collide directly into each other, **characterized by** directing a gas flow from at least one direction to a collision point of the drop jets (4).

8. A method as claimed in claim 7, **characterized by** directing two drop jets (4) coaxially towards each other in such a manner that the drop jets (4) collide substantially directly against each other.

9. A method as claimed in claim 7 or 8, **characterized by** directing the drop jets (4) in pairs directly towards each other for producing one or more drop jet pairs in such a manner that the drop jets (4) directed directly towards each other collide directly into each other.

10. A method as claimed in claim 7, **characterized by** directing the gas flow to the collision point of the drop jets (4) in a substantially perpendicular direction with respect to the flow direction of the drop jets (4).

11. A method as claimed in any one of the preceding claims 7 to 10, **characterized by** producing at least two different drop jets (4) by using at least two different liquids (3).

12. A method as claimed in claim 11, **characterized in that** the liquids (3) are immiscible with each other.

13. A method as claimed in any one of the preceding claims 7 to 12, **characterized by** atomizing the drop jets (4) directed directly towards each other in such a manner that the average drop size therein is different.

14. A method as claimed in any one of the preceding claims 7 to 13, **characterized by** using at least one liquid (3) containing a solvent and a metal salt dissolved therein.

## Patentansprüche

1. Vorrichtung zur Erzeugung von Nebel oder Aerosol, welche Vorrichtung zumindest zwei Zerstäuber (2) zum Zerstäuben einer ihnen zugeführten Flüssigkeit (3) in Tropfenstrahlen (4) aufweist, wobei die zumindest zwei Zerstäuber (2) direkt einander zugewandt in der Weise angeordnet sind, dass die dabei erzeugten Tropfenstrahlen (4) direkt aufeinander aufprallen, **dadurch gekennzeichnet, dass** die Vorrichtung zumindest eine Gasdüse (5) zum Zuführen von Gas von zumindest einer Richtung zu einem Aufprallpunkt der Tropfenstrahlen (4) aufweist.

2. Vorrichtung nach Patentanspruch 1, **dadurch gekennzeichnet, dass** zumindest zwei Zerstäuber (2) koaxial gegenüberliegend in der Weise angeordnet sind, dass ihre Tropfenstrahlen (4) wesentlich direkt aufeinander aufprallen.

3. Vorrichtung nach Patentanspruch 1 oder 2, **dadurch gekennzeichnet, dass** die Zerstäuber (2) paarweise angeordnet sind, um ein oder mehrere Zerstäuberpaare in der Weise auszubilden, dass die Zerstäuber (2) jedes Zerstäuberpaars direkt einander zugewandt sind.

4. Vorrichtung nach Patentanspruch 1, **dadurch gekennzeichnet, dass** die Gasdüse (5) in der Vorrichtung in der Weise angeordnet ist, dass der Gasfluss in einer wesentlich senkrechten Richtung in Bezug auf die Richtung der Tropfenstrahlen (4) verläuft.

5. Vorrichtung nach einem der vorhergehenden Patentansprüche 1 bis 4, **dadurch gekennzeichnet, dass** die Vorrichtung Mittel zum Zuführen von zumindest zwei verschiedenen Flüssigkeiten (3) zu zumindest zwei verschiedenen Zerstäubern (2) aufweist.

6. Vorrichtung nach einem der vorhergehenden Patentansprüche 1 bis 5, **dadurch gekennzeichnet, dass** zumindest zwei Zerstäuber (2) angeordnet sind, Tropfenstrahlen (4) zu erzeugen, wobei die durchschnittliche Tropfengröße der Tropfen der Strahlen unterschiedlich ist.

7. Verfahren zum Erzeugen von Nebel oder Aerosol, bei welchem Verfahren zumindest eine Flüssigkeit (3) in zwei oder mehrere Tropfenstrahlen (4) zerstäubt wird, indem zumindest zwei Tropfenstrahlen (4) direkt gegeneinander in der Weise gerichtet werden, dass die Tropfenstrahlen (4) direkt aufeinander aufprallen, **dadurch gekennzeichnet, dass** ein Gasfluss von zumindest einer Richtung auf einen Aufprallpunkt der Tropfenstrahlen (4) gerichtet wird.

8. Verfahren nach Patentanspruch 7, **dadurch gekennzeichnet, dass** zwei Tropfenstrahlen (4) koaxial gegeneinander in der Weise gerichtet werden, dass die Tropfenstrahlen (4) wesentlich direkt aufeinander aufprallen.

9. Verfahren nach Patentanspruch 7 oder 8, **dadurch gekennzeichnet, dass** die Tropfenstrahlen (4) paarweise direkt gegeneinander gerichtet werden, um ein oder mehrere Tropfenstrahlpaare in der Weise auszubilden, dass die direkt gegeneinander gerichteten Tropfenstrahlen (4) direkt aufeinander aufprallen.

10. Verfahren nach Patentanspruch 7, **dadurch gekennzeichnet, dass** der Gasfluss auf den Aufprallpunkt der Tropfenstrahlen (4) in einer wesentlich senkrechten Richtung in Bezug auf die Flussrichtung der Tropfenstrahlen (4) gerichtet wird.

11. Verfahren nach einem der vorhergehenden Patentansprüche 7 bis 10, **dadurch gekennzeichnet, dass** zumindest zwei verschiedene Tropfenstrahlen (4) anhand von zumindest zwei verschiedenen Flüssigkeiten (3) erzeugt werden.

12. Verfahren nach Patentanspruch 11, **dadurch gekennzeichnet, dass** die Flüssigkeiten (3) miteinander unvermischbar sind.

13. Verfahren nach einem der vorhergehenden Patentansprüche 7 bis 12, **dadurch gekennzeichnet, dass** die direkt gegeneinander gerichteten Tropfenstrahlen (4) in der Weise zerstäubt werden, dass die durchschnittliche Tropfengröße darin unterschiedlich ist.

14. Verfahren nach einem der vorhergehenden Patentansprüche 7 bis 13, **dadurch gekennzeichnet, dass** zumindest eine Flüssigkeit (3), die ein Lösungsmittel und ein darin gelöstes Metallsalz enthält, verwendet wird.

## Revendications

1. Dispositif de production de brume ou d'aérosol, le dispositif comprenant au moins deux atomiseurs (2) destinés à atomiser un liquide (3) conduit jusqu'à eux en des jets de gouttes (4), les au moins deux atomiseurs (2) étant agencés orientés directement l'un vers l'autre de manière à amener les jets de gouttes (4) qu'ils produisent à entrer directement en collision les uns avec les autres, **caractérisé en ce que** le dispositif comprend au moins une buse à gaz (5) destinée à acheminer un gaz depuis au moins une direction vers un point de collision des jets de gouttes (4).

2. Dispositif selon la revendication 1, **caractérisé en ce qu'**au moins deux atomiseurs (2) sont agencées de façon coaxialement opposée de manière à amener leurs jets de gouttes (4) à entrer pratiquement directement en collision les uns contre les autres.

3. Dispositif selon la revendication 1 ou 2, **caractérisé en ce que** les atomiseurs (2) sont agencés par paires pour produire une ou plusieurs paires d'atomiseurs d'une manière telle que les atomiseurs (2) de chaque paire d'atomiseurs soient orientés directement l'un vers l'autre.

4. Dispositif selon la revendication 1, **caractérisé en ce que** la buse à gaz (5) est agencée dans le dispositif d'une manière telle que l'écoulement de gaz passe dans une direction sensiblement perpendiculaire par rapport à la direction des jets de gouttes (4).

5. Dispositif selon l'une quelconque des revendications 1 à 4, **caractérisé en ce que** le dispositif comprend un moyen destiné à acheminer au moins deux liquides (3) différents jusqu'à au moins deux atomiseurs (2) différents.

6. Dispositif selon l'une quelconque des revendications 1 à 5, **caractérisé en ce qu'**au moins deux atomiseurs (2) sont agencés pour produire des jets de gouttes (4), les tailles de goutte moyennes de leurs gouttes étant différentes.

7. Procédé de production de brume ou d'aérosol, selon lequel au moins un premier liquide (3) est atomisé en deux, ou plus, jets de gouttes (4) en dirigeant au moins deux jets de gouttes (4) directement l'un vers l'autre d'une manière telle que les jets de gouttes (4) entrent directement en collision l'un avec l'autre, **caractérisé par** l'orientation d'un écoulement de gaz depuis au moins une direction vers un point de collision des jets de gouttes (4).

8. Procédé selon la revendication 7, **caractérisé par** l'orientation de deux jets de gouttes (4) coaxialement l'un vers l'autre d'une manière telle que les jets de gouttes (4) entrent pratiquement directement en collision l'un contre l'autre.

9. Procédé selon la revendication 7 ou 8, **caractérisé par** l'orientation des jets de gouttes (4) par paires directement l'un vers l'autre pour produire une ou plusieurs paires de jets de gouttes d'une manière telle que les jets de gouttes (4) dirigés directement les uns vers les autres entrent directement en collision les uns avec les autres.

10. Procédé selon la revendication 7, **caractérisé par** l'orientation de l'écoulement de gaz vers le point de collision des jets de gouttes (4) d'une manière sensiblement perpendiculaire par rapport à la direction d'écoulement des jets de gouttes (4).

11. Procédé selon l'une quelconque des revendications 7 à 10, **caractérisé par** la production d'au moins deux jets de gouttes (4) différents en utilisant au moins deux liquides (3) différents.

12. Procédé selon la revendication 11, **caractérisé en ce que** les liquides (3) sont non miscibles l'un avec l'autre.

13. Procédé selon l'une quelconque des revendications 7 à 12, **caractérisé par** l'atomisation des jets de gouttes (4) dirigés directement l'un vers l'autre d'une manière telle que la taille de goutte moyenne de ceux-ci est différente.

14. Procédé selon l'une quelconque des revendications 7 à 13, **caractérisé par** l'utilisation d'au moins un liquide (3) contenant un solvant et un sel métallique dissous dans celui-ci.
